(19) Europäisches Patentamt / European Patent Office / Office européen des brevets

(11) **EP 2 884 794 B1**

(12) **EUROPEAN PATENT SPECIFICATION**

(45) Date of publication and mention
of the grant of the patent:
**26.04.2017 Bulletin 2017/17**

(21) Application number: **13828229.8**

(22) Date of filing: **09.08.2013**

(51) Int Cl.:
***H04W 24/08*** (2009.01)

(86) International application number:
**PCT/CN2013/081161**

(87) International publication number:
**WO 2014/023263 (13.02.2014 Gazette 2014/07)**

(54) **METHOD AND DEVICE FOR PERFORMING STATISTICS ON DATA RADIO BEARER PACKET LOSS RATE**

VERFAHREN UND VORRICHTUNG ZUR AUSFÜHRUNG VON STATISTIKEN ZUR PAKETVERLUSTRATE EINES DATENFUNKTRÄGERS

PROCÉDÉ ET DISPOSITIF PERMETTANT DE RÉALISER DES STATISTIQUES SUR LE TAUX DE PERTE DE PAQUETS DE PORTEUSE RADIO DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2012 CN 201210281696**

(43) Date of publication of application:
**17.06.2015 Bulletin 2015/25**

(73) Proprietor: **ZTE Corporation
Shenzhen, Guangdong 518057 (CN)**

(72) Inventors:
• **BA, Mingchun
Shenzhen
Guangdong 518057 (CN)**
• **LIU, Rui
Shenzhen
Guangdong 518057 (CN)**

(74) Representative: **Awapatent AB
Junkersgatan 1
582 35 Linköping (SE)**

(56) References cited:
WO-A2-2012/061680     CN-A- 102 065 464
CN-A- 102 868 546      US-A1- 2008 080 390

• "LTE; Evolved Universal Terrestrial Radio Access (E-UTRA); Layer 2 - Measurements (3GPP TS 36.314 version 10.2.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V10.2.0, 1 November 2011 (2011-11-01), XP014068375,
• CATT: "Possible Measurement Types for MDT QoS Verification", 3GPP DRAFT; R2-120772, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 31 January 2012 (2012-01-31), XP050565555, [retrieved on 2012-01-31]
• 'Evolved Universal Terrestrial Radio Access (E-UTRA); Layer2-Measurements (3GPPTS 36.314 version 10.2.0 Release 10)' ETSI TS 136 314 V10.2.0, LTE 30 November 2011, XP014068375

**Description**

Technical Field

The present invention relates to the communication technology field, and in particular, to a method and apparatus for performing statistics on data radio bearer (DRB) packet loss rate.

Background of the Related Art

The Key Performance Indicator (KPI) statistics refers to, in the wireless communication system, performing statistics of the system performance index at each key point, and the operation performance of the system can be reflected relatively entirely and accurately through the statistics value of the KPI. Wherein, the DRB packet loss rate, as an important performance index of the KPI, is used to monitor the operation performance of the system.

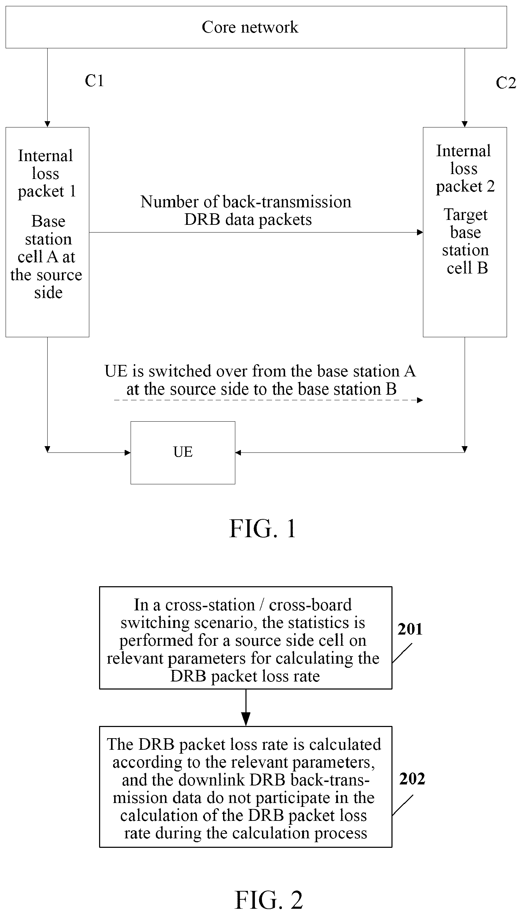

In the cross-station / cross-board situation, for example, assume a scenario that a User Equipment (UE) switches to the cell of the base station B from the cell of the base station A and the download data service is open all the times during the switchover period, as shown in FIG. 1.

It can be seen from FIG. 1 that, during the switchover, the base station at the source side counts that the DRB downlink data bulk received from the core network is C1, the packet loss number through and within the base station is LostNum1, the data bulk sent to the UE through the air interface is Dnum1, and the data bulk back transmitted to the base station at the target side through the data back-transmission channel is BackNum; the downlink DRB data bulk received by the base station at the target side from the core network is C2, the data bulk received from the back-transmission channel is BackNum, the data bulk sent to the UE through the air interface is Dnum2, and the data bulk lost within the base station is LostNum2.

According to the definition in the 3GPP protocol 36.314, the packet loss rate in the base station cell at the source side is: LostNum1/C1, the packet loss rate in the base station cell at the target side is: LostNum2/(C2+BackNum). It can be seem from FIG. 1 that C1 = LostNum1 + Dnum1 + BackNum. By comparing the calculation formulae of the packet loss rates of the base station at the source side and the base station at the target side are compared, and the calculation formulae of the downlink DRB packet loss rates of the source side cell A and the target side cell B, it can be seen that the downlink DRB back-transmission data packets BackNum at the denominators of the two formulae are calculated repeatedly. Under the situation that the UE is switched over frequently, the number of the back-transmission data packets will be large, and the repetitive calculation will dilute the calculation result of the KPI, influence the accuracy of the KPI calculation, and have bad influence on the monitoring of the operation performance of the system.

Content of the Invention

In view of the above-mentioned analysis, the embodiments of the present invention provide a method and apparatus for performing the statistics on the DRB packet loss rate, used for solving the adverse effect to the monitoring of the operation performance of the system caused because the calculation of the loss rate is inaccurate in the related art.

In order to solve the above technical problem, a method according to claim 1 and an apparatus according to claim 2 are provided.

The method for performing statistics on data radio bearer (DRB) packet loss rate comprises in a cross-station / cross-board switching scenario:

the step of performing statistics on relevant parameters for calculating the DRB packet loss rate comprises:

after the source cell is activated, performing statistics on a number of all downlink DRB data packets, a number of downlink DRB loss packets, and a number of downlink back-transmission DRB data packets received by the source cell in a preset period on a radio bearer of each service quality classification identifier (QCI) grade.

The DRB packet loss rate of the source cell is calculated according to the following formula:

$$M(T,qci) = \left\lfloor \frac{Ddisc(T,qci)*1000000}{N(T,qci) - N_{X2}(T,qci)} \right\rfloor,$$

wherein, $M(T,qci)$ represents the DRB packet loss rate in the preset period on a radio bearer of any one QCI grade, $N(T, qci)$ represents the number of all downlink DRB data packets received by the source cell, $N_{x2}(T,qci)$ represents the number of downlink back-transmission DRB data packets, and the *Ddisc*(*T,qci*) represents the number of the downlink DRB loss packets.

Alternatively, the step of performing statistics on relevant parameters for calculating the DRB packet loss rate comprises:

after the source cell is activated, performing statistics on a number of downlink DRB loss packets, a number of downlink DRB data packets of which a hybrid automatic repeat request (HARQ) is successful and a number of DRB data packets of which the HARQ is failed of the cell in the preset period on the radio bearer of each QCI grade.

The DRB packet loss rate of the source cell is calculated according to the following formula:

$$M(T,qci) = \left\lfloor \frac{Ddisc(T,qci)*1000000}{N(T,qci)+Dloss(T,qci)+Ddisc(T,qci)} \right\rfloor,$$

wherein, $M(T,qci)$ represents the DRB packet loss rate in the preset period on the radio bearer of any one QCI grade, $Ddisc(T,qci)$ represents the number of the downlink DRB loss packets of the source cell, $N(T,qci)$ represents the number of the downlink DRB data packets of which the HARQ is successful, and the $Dloss(T,qci)$ represents the number of the downlink DRB data packets of which the HARQ is failed.

The apparatus for performing statistics on data radio bearer (DRB) packet loss rate comprises:

a statistics module and a calculation module, wherein in a cross-station / cross-board switching scenario:

the statistics module is configured to: after the source cell is activated, perform statistics on a number of all downlink DRB data packets, a number of downlink DRB loss packets, and a number of downlink back-transmission DRB data packets received by the source cell in a preset period on a radio bearer of each service quality classification identifier (QCI) grade.

The calculation module is configured to: calculate the DRB packet loss rate of the cell according to the following formula:

$$M(T,qci) = \left\lfloor \frac{Ddisc(T,qci)*1000000}{N(T,qci)-N_{X2}(T,qci)} \right\rfloor,$$

wherein, $M(T,qci)$ represents the DRB packet loss rate in the preset period on a radio bearer of any one QCI grade, $N(T,qci)$ represents the number of all downlink DRB data packets received by the source cell, $N_{x2}(T,qci)$ represents the number of downlink back-transmission DRB data packets, and the $Ddisc(T,qci)$ represents the number of the downlink DRB loss packets.

Alternatively, the statistic module is configured to: after the source cell is activated, perform statistics on a number of downlink DRB loss packets, a number of downlink DRB data packets of which a hybrid automatic repeat request (HARQ) is successful and a number of DRB data packets of which the HARQ is failed of the source cell in the preset period on the radio bearer of each QCI grade.

The calculation module is configured to: calculate the DRB packet loss rate of the source cell according to the following formula:

$$M(T,qci) = \left\lfloor \frac{Ddisc(T,qci)*1000000}{N(T,qci)+Dloss(T,qci)+Ddisc(T,qci)} \right\rfloor,$$

wherein, $M(T,qci)$ represents the DRB packet loss rate in the preset period on the radio bearer of any one QCI grade, $Ddisc(T,qci)$ represents the number of the downlink DRB loss packets of the source cell, $N(T,qci)$ represents the number of the downlink DRB data packets of which the HARQ is successful, and the $Dloss(T,qci)$ represents the number of the downlink DRB data packets of which the HARQ is failed.

The embodiments of the present invention can calculate the DRB packet loss rate accurately, will not dilute the calculation result of the DRB packet loss rate, and then will not influence the monitoring of the operation performance of the system.

Brief Description of Drawings

FIG. 1 is a transmission diagram of the downlink DRB data packet during the cross-station switching process in the related art;

FIG. 2 is a flow chart of a first method embodiment of the present invention;

FIG. 3 is a diagram of an application scenario of a second method embodiment of the present invention;

FIG. 4 is a flow chart of a second method embodiment of the present invention;

FIG. 5 is a diagram of an application scenario of a third method embodiment of the present invention;

FIG. 6 is a flow chart of a third method embodiment of the present invention;

FIG. 7 is a structure diagram of an apparatus embodiment of the present invention.

Preferred Embodiments of the Present Invention

The embodiment of the present invention is described in detail with reference to the accompanying drawings hereinafter. It should be illustrated that, in the case of not conflicting, the embodiments in the present application and features in these embodiments can be combined with each other.
The method embodiments of the present invention are described in detail with reference to the accompanying drawings FIG. 2 to FIG. 6 firstly.
FIG. 2 is a flow chart of the method in the embodiment of the present invention, including the following steps.
In step 201, in a cross-station / cross-board switching scenario, the statistics is performed for a source cell on relevant parameters for calculating the DRB packet loss rate.
In step 202, the DRB packet loss rate is calculated according to the relevant parameters, and the downlink DRB back-transmission data do not participate in a calculation of the DRB packet loss rate during the calculation process.

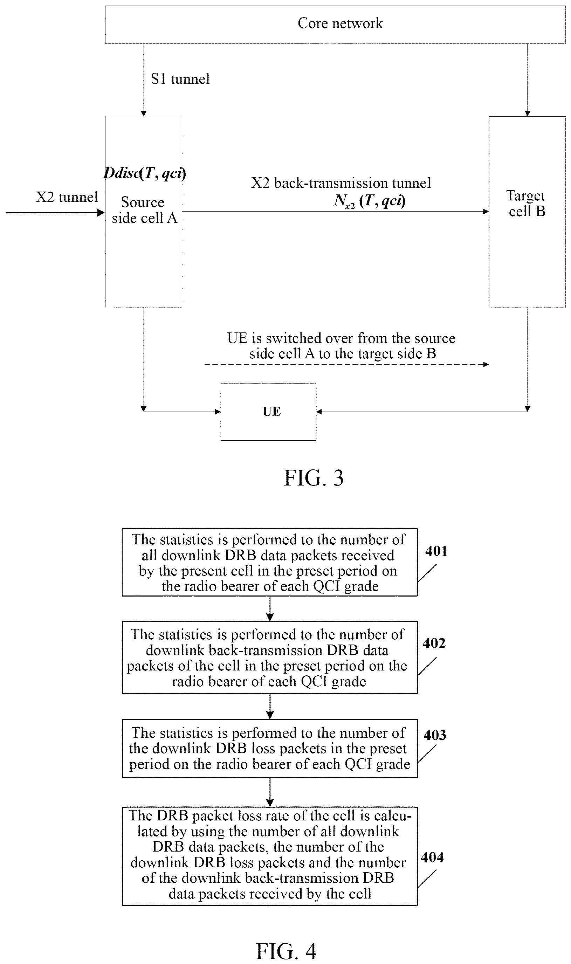

FIG. 3 is a diagram of an application scenario of a second method embodiment of the present invention.
FIG. 4 is a flow chart of a second method embodiment of the present invention; under the cross-station / cross-board switching scenario, statistics of a number of a cell general packet radio service (GPRS) tunneling protocol user plane (GTPU) X2 downlink back-transmission packets is added, including the following steps.
In step 401, after the cell is activated, the statistics is performed on the number $N(T,qci)$ of all downlink data radio bearer (DRB) data packets received from the GTPU tunnel (including the S 1 tunnel and the X2 tunnel) by the packet data convergence protocol (PDCP) in the period T on the radio bearer of each QCI = $qci$ (QCI is the service quality classification identifier, and $qci$ represents the specific grade of the QCI).
In step 402, after the cell is activated, the statistics is performed to the number $N_{x2}(T,qci)$ of all downlink DRB data packets back transmitted from the X2 tunnel to the cross-station / cross-board target side cell in the period T on the radio bearer of each QCI = qci.
In step 403, after the cell is activated, the statistics is performed to the number $Ddisc(T,qci)$ of all downlink DRB data packets lost within the base station in the period T on the radio bearer of each QCI = qci.
In step 404, the statistics calculation is triggered in each statistics period T, the DRB packet loss rate $M(T,qci)$ of the cell in the period T under the QCI=qci is calculated according to the following formula:

$$M(T,qci) = \left\lfloor \frac{Ddisc(T,qci)*1000000}{N(T,qci) - N_{X2}(T,qci)} \right\rfloor$$

It needs to be illustrated that the sequence of executing the above-mentioned step 401 to step 403 is not freeness to the above-mentioned sequence.

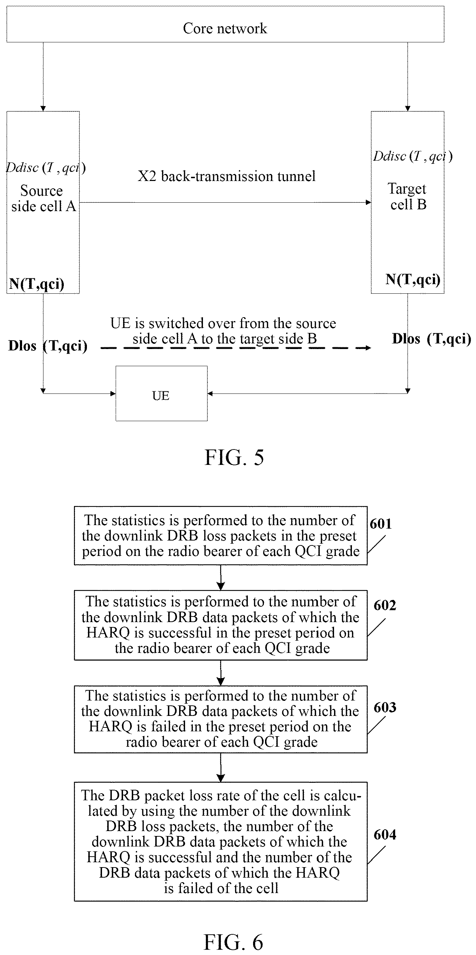

FIG. 5 is a diagram of an application scenario of a third method embodiment of the present invention.

FIG. 6 is a flow chart of a third method embodiment of the present invention. Under the cross-station / cross-board switching scenario, the packet loss rate of the cell is calculated by using the number of the downlink DRB loss packets, the number of the downlink DRB data packets of which a hybrid automatic repeat request (HARQ) is successful and the number of the DRB data packets of which the HARQ is failed of the cell, including the following steps.

In step 601, after the cell is activated, the statistics is performed to the number $Ddisc(T,qci)$ of all downlink DRB data packets lost within the base station in the period T on the radio bearer of QCI = qci.

In step 602, after the cell is activated, the statistics is performed to the number $N(T,qci)$ of all downlink DRB data packets of which the HARQ is successful in the period T on the radio bearer of QCI = qci.

In step 603, after the cell is activated, the statistics is performed to the number $Dloss(T,qci)$ of all downlink DRB data packets of which the HARQ is failed in the period T on the radio bearer of QCI = qci.

In step 604, the statistics calculation is triggered in each statistics period T, the DRB packet loss rate $M(T,qci)$ of the cell in the period T under the QCI=qci is calculated according to the following formula:

$$M(T,qci) = \left\lfloor \frac{Ddisc(T,qci)*1000000}{N(T,qci)+Dloss(T,qci)+Ddisc(T,qci)} \right\rfloor$$

It needs to be illustrated that the sequence of executing the above-mentioned step 601 to step 603 is not limited to the above-mentioned sequence.

Next, the apparatus embodiment of the present invention is further described in detail with reference with the accompanying drawing 7.

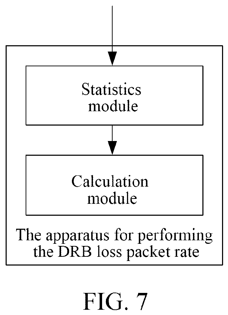

As shown in FIG. 7, FIG. 7 is a structure diagram of an apparatus embodiment of the present invention, including a statistics module and a calculation module; wherein,
the statistics module is configured to: in the cross-station / cross-board switching scenario, for the source side cell, perform the statistics on the parameters relevant to the DRB packet loss rate; and
the calculation module is configured to: calculate the DRB packet loss rate according to the relevant parameters, and the downlink DRB back-transmission data do not participate in the calculation of the DRB packet loss rate during the calculation process.

When the statistics module is configured to: in the cross-station / cross-board switching scenario, for the source side cell, after the cell is activated, perform the statistics on the number of all downlink DRB data packets, the number of downlink DRB loss packets, and the number of downlink back-transmission DRB data packets received by the cell in a preset period on a radio bearer of each service quality classification identifier (QCI) grade.

Then the calculation module is configured to: calculate the DRB packet loss rate of the cell according to the following formula:

$$M(T,qci) = \left\lfloor \frac{Ddisc(T,qci)*1000000}{N(T,qci)-N_{X2}(T,qci)} \right\rfloor,$$

wherein, $M(T,qci)$ represents the DRB packet loss rate in the preset period on a radio bearer of any one QCI grade, $N(T,qci)$ represents the number of all downlink DRB data packets received by the source cell, $N_{x2}(T,qci)$ represents the number of downlink back-transmission DRB data packets, and the $Ddisc(T,qci)$ represents the number of the downlink DRB loss packets.

When the statistic module is configured to: in the cross-station / cross-board switching scenario, for the source side cell, after the cell is activated, perform statistics on the number of downlink DRB loss packets, the number of downlink DRB data packets of which a hybrid automatic repeat request (HARQ) is successful and the number of DRB data packets of which the HARQ is failed of the source cell in the preset period on the radio bearer of each QCI grade,
then the calculation module is configured to: calculate the DRB packet loss rate of the source cell according to the following formula:

$$M(T,qci) = \left\lfloor \frac{Ddisc(T,qci)*1000000}{N(T,qci)+Dloss(T,qci)+Ddisc(T,qci)} \right\rfloor,$$

wherein, $M(T,qci)$ represents the DRB packet loss rate in the preset period on the radio bearer of any one QCI grade, $Ddisc(T,qci)$ represents the number of the downlink DRB loss packets of the source cell, $N(T,qci)$ represents the number of the downlink DRB data packets of which the HARQ is successful, and the $Dloss(T,qci)$ represents the number of the downlink DRB data packets of which the HARQ is failed.

In sum, the embodiments of the present invention provide a method and apparatus for performing statistics on the DRB packet loss rate, under the cross-station / cross-board switching scenario, the downlink DRB back-transmission data does not participate in the calculation of the packet loss rate of the source side cell, which regards the source side cell as a transparent entity. In this way, even if the number of the back-transmission data packets will be large in the situation that the UE is switched over frequently, the DRB packet loss rate can be accurately calculated by adopting the calculation method of the embodiments of the present invention, where the calculation result of the DRB packet loss rate will not be diluted, and then the monitoring of the operation performance of the system will not be influenced.

Obviously, it can be understood by those skilled in the art that each module or each step above-mentioned in the present invention can be implemented by the universal calculating apparatus, and they can be integrated in a single calculating apparatus, or distributed in the network made up by a plurality of calculating apparatus. Alternatively, they can be implemented by the executable program codes of the calculating apparatus. Accordingly, they can be stored in the storage apparatus and implemented by the calculating apparatus, and in some situation, the shown or described steps can be executed according to a sequence different from this place, or they are made to each integrated circuit module respectively, or a plurality of modules or steps therein are made into the single integrated circuit module to be implemented. This way, the present invention is not limit to any specific form of the combination of the hardware and software.

The above description is only the specific embodiment of the present invention and is not intended to limit the protection scope of the present invention. Those modifications and replacements which can be thought out easily by those skilled in the art in the technical scope disclosed by the present invention should be embodied in the protection scope of the present invention. Therefore, the protection scope of the present invention should be based on the protection scope described by the claims.

Industrial Applicability

The embodiments of the present invention can calculate the DRB packet loss rate accurately, will not dilute the calculation result of the DRB packet loss rate, and then will not influence the monitoring of the operation performance of the system.

**Claims**

1. A method for performing statistics on data radio bearer, DRB, packet loss rate, **characterized by** comprising: in a cross-station / cross-board switching scenario,
after a source cell is activated, performing statistics on a number of all downlink DRB data packets, a number of downlink DRB loss packets, and a number of downlink back-transmission DRB data packets received by the source cell in a preset period on a radio bearer of each service quality classification identifier, QCI, grade (201, 401, 402, 403); and
calculating the DRB packet loss rate of the source cell according to the following formula:

$$M(T, qci) = \left\lfloor \frac{Ddisc(T, qci) * 1000000}{N(T, qci) - N_{X2}(T, qci)} \right\rfloor,$$

wherein, $M(T, qci)$ represents the DRB packet loss rate in the preset period on a radio bearer of any one QCI grade, $N(T, qci)$ represents the number of all downlink DRB data packets received by the source cell, $N_{x2}(T, qci)$ represents the number of downlink back-transmission DRB data packets, and the $Ddisc(T, qci)$ represents the number of the downlink DRB loss packets;
or,
after the source cell is activated, performing statistics on a number of downlink DRB loss packets, a number of downlink DRB data packets of which a hybrid automatic repeat request, HARQ, is successful and a number of DRB data packets of which the HARQ is failed of the cell in a preset period on a radio bearer of each QCI grade (201, 601, 602, 603);
calculating the DRB packet loss rate of the source cell according to a following formula:

$$M(T,qci) = \left\lfloor \frac{Ddisc(T,qci)*1000000}{N(T,qci)+Dloss(T,qci)+Ddisc(T,qci)} \right\rfloor,$$

wherein, $M(T,qci)$ represents the DRB packet loss rate in the preset period on the radio bearer of any one QCI grade, $Ddisc(T,qci)$ represents the number of the downlink DRB loss packets of the source cell, $N(T,qci)$ represents the number of the downlink DRB data packets of which the HARQ is successful, and the $Dloss(T,qci)$ represents the number of the downlink DRB data packets of which the HARQ is failed.

2. An apparatus for performing statistics on data radio bearer, DRB, packet loss rate, **characterized by** comprising:
a statistics module and a calculation module; wherein in a cross-station / cross-board switching scenario,
the statistics module is configured to: after a source cell is activated, perform statistics on a number of all downlink DRB data packets, a number of downlink DRB loss packets, and a number of downlink back-transmission DRB data packets received by the source cell in a preset period on a radio bearer of each service quality classification identifier, QCI, grade
the calculation module is configured to: calculate the DRB packet loss rate of the cell according to the following formula:

$$M(T,qci) = \left\lfloor \frac{Ddisc(T,qci)*1000000}{N(T,qci)-N_{X2}(T,qci)} \right\rfloor,$$

wherein, $M(T,qci)$ represents the DRB packet loss rate in the preset period on a radio bearer of any one QCI grade, $N(T,qci)$ represents the number of all downlink DRB data packets received by the source cell, $N_{x2}(T,qci)$ represents the number of downlink back-transmission DRB data packets, and the $Ddisc(T,qci)$ represents the number of the downlink DRB loss packets;
or,
the statistic module is configured to: after the source cell is activated, perform statistics on a number of downlink DRB loss packets, a number of downlink DRB data packets of which a hybrid automatic repeat request, HARQ, is successful and a number of DRB data packets of which the HARQ is failed of the source cell in a preset period on a radio bearer of each QCI grade;
the calculation module is configured to: calculate the DRB packet loss rate of the source cell according to the following formula:

$$M(T,qci) = \left\lfloor \frac{Ddisc(T,qci)*1000000}{N(T,qci)+Dloss(T,qci)+Ddisc(T,qci)} \right\rfloor,$$

wherein, $M(T,qci)$ represents the DRB packet loss rate in the preset period on the radio bearer of any one QCI grade, $Ddisc(T,qci)$ represents the number of the downlink DRB loss packets of the source cell, $N(T,qci)$ represents the number of the downlink DRB data packets of which the HARQ is successful, and the $Dloss(T,qci)$ represents the number of the downlink DRB data packets of which the HARQ is failed.

**Patentansprüche**

1. Verfahren zum Anlegen einer Statistik bezüglich einer Datenfunkträger (Data Radio Bearer, DRB)-Paketverlustrate, **dadurch gekennzeichnet, dass** es Folgendes umfasst: in einem Cross-Station/Cross-Board Switching-Szenario, nachdem eine Ursprungszelle aktiviert wurde, Anlegen einer Statistik bezüglich einer Anzahl aller Downlink-DRB-Datenpakete, einer Anzahl von Downlink-DRB-DRB-Verlustpaketen und einer Anzahl von Downlink-Rückübertragungs-DRB-Datenpaketen, die durch die Ursprungszelle in einem voreingestellten Zeitraum auf einem Funkträger jeder Dienst-Quality Classification Identifier (QCI)-Sorte (201, 401, 402, 403) empfangen wurden; und Berechnen der DRB-Paketverlustrate der Ursprungszelle gemäß der folgenden Formel:

$$M(T,qci) = \left\lfloor \frac{Ddisc(T,qci)*1000000}{N(T,qci) - N_{x2}(T,qci)} \right\rfloor,$$

wobei M(T,qci) die DRB-Paketverlustrate in dem voreingestellten Zeitraum auf einem Funkträger jeder einzelnen QCI-Sorte darstellt, N(T,qci) die Anzahl aller Downlink-DRB-Datenpakete darstellt, die durch die Ursprungszelle empfangen wurden, $N_{x2}$(T,qci) die Anzahl von Downlink-Rückübertragungs-DRB-Datenpaketen darstellt, und die Ddisc(T,qci) die Anzahl der Downlink-DRB-DRB-Verlustpakete darstellt; oder

nachdem die Ursprungszelle aktiviert wurde, Anlegen einer Statistik bezüglich einer Anzahl von Downlink-DRB-DRB-Verlustpaketen, einer Anzahl von Downlink-DRB-Datenpaketen, bei denen eine Hybrid Automatic Repeat Request (HARQ) erfolgreich ist, und einer Anzahl von DRB-Datenpaketen, bei denen die HARQ in der Zelle in einem voreingestellten Zeitraum auf einem Funkträger jeder QCI-Sorte (201, 601, 602, 603) nicht erfolgreich ist; Berechnen der DRB-Paketverlustrate der Ursprungszelle gemäß der folgenden Formel:

$$M(T,qci) = \left\lfloor \frac{Ddisc(T,qci)*1000000}{N(T,qci) + Dloss(T,qci) + Ddisc(T,qci)} \right\rfloor,$$

wobei M(T,qci) die DRB-Paketverlustrate in dem voreingestellten Zeitraum auf dem Funkträger jeder einzelnen QCI-Sorte darstellt, Ddisc(T,qci) die Anzahl der Downlink-DRB-DRB-Verlustpakete der Ursprungszelle darstellt, N(T,qci) die Anzahl der Downlink-DRB-Datenpakete darstellt, bei denen die HARQ erfolgreich ist, und Dloss(T,qci) die Anzahl der Downlink-DRB-Datenpakete darstellt, bei denen die HARQ nicht erfolgreich ist.

2. Vorrichtung zum Anlegen einer Statistik bezüglich einer Datenfunkträger (Data Radio Bearer, DRB)-Paketverlustrate, **dadurch gekennzeichnet, dass** sie Folgendes umfasst: ein Statistikmodul und ein Berechnungsmodul; wobei in einem Cross-Station/Cross-Board Switching-Szenario

das Statistikmodul für Folgendes konfiguriert ist: nachdem eine Ursprungszelle aktiviert wurde, Anlegen einer Statistik bezüglich einer Anzahl aller Downlink-DRB-Datenpakete, einer Anzahl von Downlink-DRB-DRB-Verlustpaketen und einer Anzahl von Downlink-Rückübertragungs-DRB-Datenpaketen, die durch die Ursprungszelle in einem voreingestellten Zeitraum auf einem Funkträger jeder Dienst-Quality Classification Identifier (QCI)-Sorte empfangen wurden;

das Berechnungsmodul für Folgendes konfiguriert ist: Berechnen der DRB-Paketverlustrate der Ursprungszelle gemäß der folgenden Formel:

$$M(T,qci) = \left\lfloor \frac{Ddisc(T,qci)*1000000}{N(T,qci) - N_{x2}(T,qci)} \right\rfloor,$$

wobei M(T,qci) die DRB-Paketverlustrate in dem voreingestellten Zeitraum auf einem Funkträger jeder einzelnen QCI-Sorte darstellt, N(T,qci) die Anzahl aller Downlink-DRB-Datenpakete darstellt, die durch die Ursprungszelle empfangen wurden, $N_{x2}$(T,qci) die Anzahl von Downlink-Rückübertragungs-DRB-Datenpaketen darstellt, und die Ddisc(T,qci) die Anzahl der Downlink-DRB-DRB-Verlustpakete darstellt; oder

das Statistikmodul für Folgendes konfiguriert ist: nachdem die Ursprungszelle aktiviert wurde, Anlegen einer Statistik bezüglich einer Anzahl von Downlink-DRB-DRB-Verlustpaketen, einer Anzahl von Downlink-DRB-Datenpaketen, bei denen eine Hybrid Automatic Repeat Request (HARQ) erfolgreich ist, und einer Anzahl von DRB-Datenpaketen, bei denen die HARQ in der Zelle in einem voreingestellten Zeitraum auf einem Funkträger jeder QCI-Sorte nicht erfolgreich ist;

das Berechnungsmodul für Folgendes konfiguriert ist: Berechnen der DRB-Paketverlustrate der Ursprungszelle gemäß der folgenden Formel:

$$M(T,qci) = \left\lfloor \frac{Ddisc(T,qci)*1000000}{N(T,qci) + Dloss(T,qci) + Ddisc(T,qci)} \right\rfloor,$$

wobei M(T,qci) die DRB-Paketverlustrate in dem voreingestellten Zeitraum auf dem Funkträger jeder einzelnen QCI-Sorte darstellt, Ddisc(T,qci) die Anzahl der Downlink-DRB-DRB-Verlustpakete der Ursprungszelle darstellt, N(T,qci) die Anzahl der Downlink-DRB-Datenpakete darstellt, bei denen die HARQ erfolgreich ist, und Dloss(T,qci) die Anzahl der Downlink-DRB-Datenpakete darstellt, bei denen die HARQ nicht erfolgreich ist.

## Revendications

1. Procédé d'exécution de statistiques en ce qui concerne un taux de perte de paquets de support radio de données, DRB, **caractérisé en ce qu'**il comprend, dans un scénario de commutation à travers des stations/à travers des cartes :

   après l'activation d'une cellule source, l'exécution de statistiques en ce qui concerne un nombre de tous les paquets de données DRB de liaison descendante, un nombre de paquets perdus DRB de liaison descendante et un nombre de paquets de données DRB de transmission de retour de liaison descendante reçus par la cellule source au cours d'une période préréglée sur un support radio de chaque rang d'identifiant de classification de qualité, QCI, de service (201, 401, 402, 403) ; et
   le calcul du taux de perte de paquets DRB de la cellule source en fonction de la formule suivante :

$$M(T, qci) = \left\lfloor \frac{Ddisc(T,qci)^* 1000000}{N(T,qci) - N_{x2}(T,qci)} \right\rfloor$$

   où M(T,qci) représente le taux de perte de paquets DRB au cours de la période préréglée sur un support radio d'un rang QCI quelconque, N(T,qci) représente le nombre de tous les paquets de données DRB de liaison descendante reçus par la cellule source, $N_{x2}$(T,qci) représente le nombre de paquets de données DRB de transmission de retour de liaison descendante, et Ddisc(T,qci) représente le nombre de paquets perdus DRB de liaison descendante ;
   ou
   après l'activation de la cellule source, l'exécution de statistiques en ce qui concerne un nombre de paquets perdus DRB de liaison descendante, un nombre de paquets de données DRB de liaison descendante pour lesquels une demande de répétition automatique hybride, HARQ, est réussie, et un nombre de paquets de données DRB pour lesquels la HARQ a échoué dans la cellule source au cours d'une période préréglée sur un support radio de chaque rang QCI (201, 601, 602, 603) ;
   le calcul du taux de perte de paquets DRB de la cellule source en fonction de la formule suivante :

$$M(T, qci) = \left\lfloor \frac{Ddisc(T,qci)^* 1000000}{N(T,qci) + Dloss(T,qci) + Ddisc(T,qci)} \right\rfloor$$

   où M(T,qci) représente le taux de perte de paquets DRB au cours de la période préréglée sur le support radio d'un rang QCI quelconque, Ddisc(T,qci) représente le nombre de paquets perdus DRB de liaison descendante de la cellule source, N(T,qci) représente le nombre de paquets de données DRB de liaison descendante pour lesquels la HARQ est réussie, et Dloss(T,qci) représente le nombre de paquets de données DRB de liaison descendante pour lesquels la HARQ a échoué.

2. Appareil d'exécution de statistiques en ce qui concerne un taux de perte de paquets de support radio de données, DRB, **caractérisé en ce qu'**il comprend un module de statistiques et un module de calcul ; dans lequel, dans un scénario de commutation à travers des stations/à travers des cartes :

   le module de statistiques est configuré pour effectuer : après l'activation d'une cellule source, l'exécution de statistiques en ce qui concerne un nombre de tous les paquets de données DRB de liaison descendante, un nombre de paquets perdus DRB de liaison descendante et un nombre de paquets de données DRB de transmission de retour de liaison descendante reçus par la cellule source au cours d'une période préréglée sur un support radio de chaque rang d'identifiant de classification de qualité, QCI, de service ;
   le module de calcul est configuré pour effectuer : le calcul du taux de perte de paquets DRB de la cellule source en fonction de la formule suivante :

$$M(T, qci) = \left\lfloor \frac{Ddisc(T,qci) * 1000000}{N(T,qci) - N_{x2}(T,qci)} \right\rfloor$$

où M(T,qci) représente le taux de perte de paquets DRB au cours de la période préréglée sur un support radio d'un rang QCI quelconque, N(T,qci) représente le nombre de tous les paquets de données DRB de liaison descendante reçus par la cellule source, $N_{x2}$(T,qci) représente le nombre de paquets de données DRB de transmission de retour de liaison descendante, et Ddisc(T,qci) représente le nombre de paquets perdus DRB de liaison descendante ;

ou

le module de statistiques est configuré pour effectuer : après l'activation de la cellule source, l'exécution de statistiques en ce qui concerne un nombre de paquets perdus DRB de liaison descendante, un nombre de paquets de données DRB de liaison descendante pour lesquels une demande de répétition automatique hybride, HARQ, est réussie, et un nombre de paquets de données DRB pour lesquels la HARQ a échoué dans la cellule source au cours d'une période préréglée sur un support radio de chaque rang QCI ;

le module de calcul est configuré pour effectuer : le calcul du taux de perte de paquets DRB de la cellule source en fonction de la formule suivante :

$$M(T, qci) = \left\lfloor \frac{Ddisc(T,qci) * 1000000}{N(T,qci) + Dloss(T,qci) + Ddisc(T,qci)} \right\rfloor$$

où M(T,qci) représente le taux de perte de paquets DRB au cours de la période préréglée sur le support radio d'un rang QCI quelconque, Ddisc(T,qci) représente le nombre de paquets perdus DRB de liaison descendante de la cellule source, N(T,qci) représente le nombre de paquets de données DRB de liaison descendante pour lesquels la HARQ est réussie, et Dloss(T,qci) représente le nombre de paquets de données DRB de liaison descendante pour lesquels la HARQ a échoué.

Core network

C1                                                                          C2

| Internal loss packet 1 Base station cell A at the source side | Number of back-transmission DRB data packets → | Internal loss packet 2 Target base station cell B |

UE is switched over from the base station A at the source side to the base station B

UE

FIG. 1

In a cross-station / cross-board switching scenario, the statistics is performed for a source side cell on relevant parameters for calculating the DRB packet loss rate — **201**

↓

The DRB packet loss rate is calculated according to the relevant parameters, and the downlink DRB back-transmission data do not participate in the calculation of the DRB packet loss rate during the calculation process — **202**

FIG. 2

Core network

S1 tunnel

$Ddisc(T, qci)$

X2 tunnel | Source side cell A

X2 back-transmission tunnel
$N_{x2}(T, qci)$

Target cell B

UE is switched over from the source side cell A to the target side B

UE

## FIG. 3

The statistics is performed to the number of all downlink DRB data packets received by the present cell in the preset period on the radio bearer of each QCI grade — 401

The statistics is performed to the number of downlink back-transmission DRB data packets of the cell in the preset period on the radio bearer of each QCI grade — 402

The statistics is performed to the number of the downlink DRB loss packets in the preset period on the radio bearer of each QCI grade — 403

The DRB packet loss rate of the cell is calculated by using the number of all downlink DRB data packets, the number of the downlink DRB loss packets and the number of the downlink back-transmission DRB data packets received by the cell — 404

## FIG. 4

Core network

$Ddisc\,(T,qci)$

Source
side cell A

X2 back-transmission tunnel

$Ddisc\,(T,qci)$

Target
cell B

N(T,qci)

N(T,qci)

UE is switched over from the source
side cell A to the target side B

Dlos (T,qci)

Dlos (T,qci)

UE

FIG. 5

The statistics is performed to the number of
the downlink DRB loss packets in the preset
period on the radio bearer of each QCI grade

601

The statistics is performed to the number of
the downlink DRB data packets of which the
HARQ is successful in the preset period on
the radio bearer of each QCI grade

602

The statistics is performed to the number of
the downlink DRB data packets of which the
HARQ is failed in the preset period on the
radio bearer of each QCI grade

603

The DRB packet loss rate of the cell is calculated by using the number of the downlink
DRB loss packets, the number of the
downlink DRB data packets of which the
HARQ is successful and the number of the
DRB data packets of which the HARQ
is failed of the cell

604

FIG. 6

Statistics
module

Calculation
module

The apparatus for performing
the DRB loss packet rate

FIG. 7